# EUROPEAN PATENT APPLICATION

(11) **EP 2 017 745 A1**
(43) Date of publication of application: **21.01.2009**
(21) Application number: 08167319.6
(22) Date of filing: 21.09.2004
(51) Int. Cl.: G06F 17/27, G06F 3/033, H04M 1/2745, G06F 3/023

(54) **Mobile Wireless Communications Device Providing Enhanced Text Navigation Indicators and Related Methods**

(62) Divisional of application: 04255732.2
(71) Applicant: Research In Motion Limited, Waterloo, Ontario N2L 3W8 (CA)
(72) Inventor: Scott, Sherryl Lee Lorraine, Toronto, Ontario M5T 1Y9 (CA)
(74) Representative: Neobard, William John

(57) **Abstract**

A mobile wireless communications device may include a portable, handheld housing, and a display and keypad carried by the housing. In particular, the keypad may include a plurality of symbol keys each having indicia of at least one respective symbol thereon, and an alternate function key. A user input device and a controller may also be carried by the portable, handheld housing. The controller may be connected to the display and the keypad, and it may generate a menu of possible desired words based upon actuation of the symbol keys, and generate a word cursor in the menu for scrolling through the possible desired words based upon the user input device. The controller may also change the word cursor to a symbol cursor based upon actuation of the alternate function key for scrolling through symbols in the possible desired words based upon the user input device.

## Description

### Field of the Invention

The present invention relates to the field of communications devices, and, more particularly, to mobile wireless communications devices and related methods.

### Background of the Invention

Cellular communications systems continue to grow in popularity and have become an integral part of both personal and business communications. Cellular phones allow users to place and receive voice calls most anywhere they travel. Moreover, as cellular telephone technology has increased, so too has the functionality of cellular devices. For example, many cellular devices now incorporate personal digital assistant (PDA) features such as calendars, address books, task lists, etc. Moreover, such multi-function devices may also allow users to wirelessly send and receive electronic mail (email) messages and access the Internet via a cellular network.

Because of the reduced display and keypad size on such mobile, handheld devices, users often find it somewhat more cumbersome to perform text entry on such devices as compared to a personal computer (PC), for example. Similarly, the visual queues that users receive while entering text in mobile, handheld devices for indicating text entry modes, functions, etc., are also typically more limited than would be the case with a PC.

Various approaches have been used for providing more helpful visual indications to users when performing text or data entry. By way of example, U.S. Patent No. 6,259,432 to Yamada et al. discloses an information processing apparatus that can adjust the scrolling speed for data displayed in an application window on a display, and display a visual scrolling speed indicator. When the user manipulates a mouse to request scrolling of data in a window, the display form of the mouse cursor is changed. That is, in addition to the mouse cursor, one or more speed indicators (i.e., arrows) appears in the scrolling direction. The number of speed indicators which are displayed corresponds to the scrolling speed. The speed indicators are arranged from the center of the mouse cursor in the scrolling direction.

While such systems may be helpful for PC users, further visual indication features may be desirable in certain mobile, handheld device applications.

### Summary of the Invention

In view of the foregoing background, it is therefore an object of the present invention to provide a mobile wireless communications device which provides enhanced visual cursor indications and related methods.

This and other objects, features, and advantages in accordance with the present invention are provided by a mobile wireless communications device which has enhanced text navigation indicators to a visual distinction between word and symbol scrolling modes. More particularly, the device may include a portable, handheld housing, and a display and keypad carried by the portable, handheld housing. The keypad may include a plurality of symbol keys each having indicia of at least one respective symbol thereon, and an alternate function key. A user input device and a controller may also be carried by the portable, handheld housing. The controller may be connected to the display and the keypad, and it may be for generating a menu of possible desired words based upon actuation of the symbol keys, and generating a word cursor in the menu for scrolling through the possible desired words based upon the user input device. The controller may also be for changing the word cursor to a symbol cursor based upon actuation of the alternate function key for scrolling through symbols in at least one of the possible desired words based upon the user input device.

As a result, a user is more readily able to determine that different modes for navigating the possible desired words in the menu are available. Further, the controller may also allow at least one possible desired word in the menu to be edited when symbol scrolling is active. Thus, the user has the ability to quickly select and/or modify possible desired words and therefore enter desired words more rapidly when typing in a predictive mode, for example.

The controller may change the word cursor to the symbol cursor based upon actuation of the alternate function key and the user input device. The controller may also generate a scrolling mode indicator in the menu for indicating whether word scrolling or symbol scrolling is active. Further, the controller may cause the scrolling mode indicator to change appearance based upon actuation of the alternate function key to indicate that symbol scrolling is active. By way of example, the scrolling mode indicator may include at least one arrow, and the controller may cause the at least one arrow to change direction upon actuation of the alternate function key.

In addition, the symbol cursor may be for scrolling through symbols in a last word selected by the word cursor, and the user input device may be a scroll wheel. The mobile wireless communications may also advantageously include a wireless transceiver carried by the portable, handheld housing for cooperating with the controller to communicate over a wireless network. By way of example, the wireless transceiver may be a cellular transceiver for communicating over a cellular telephone network, and/or a wireless local area network (WLAN) transceiver for communicating over a WLAN.

A set of the symbol keys on the keypad may have indicia of a plurality of respective symbols thereon to define multi-symbol keys. Further, the symbols on the keys may be letters, and the symbol keys may be arranged to define a QWERTY layout, for example.

A method aspect of the invention is for using a mobile wireless communications device, such as the one described briefly above. The method may include generating a menu of possible desired words based upon actuation of the symbol keys, generating a word cursor in the menu for scrolling through the possible desired words based upon the user input device, and changing the word cursor to a symbol cursor based upon actuation of the alternate function key for scrolling through symbols in at least one of the possible desired words based upon the user input device.

### Brief Description of the Drawings

FIG. 1 is front elevational view of a mobile wireless communications device in accordance with the present invention.

FIG. 2 is schematic block diagram of the mobile wireless communications device of FIG. 1.

FIGS. 3 through 6 are screen prints of the display of the mobile wireless communications device of FIG. 1 illustrating changing of a word cursor to a symbol cursor in a menu of possible desired words.

FIG. 7 is a schematic block diagram of an alternate embodiment of the mobile wireless communications device of FIG. 1.

FIG. 8 is a flow diagram illustrating a mobile wireless communications method in accordance with the present invention.

FIG. 9 is a schematic block diagram of an exemplary mobile wireless communications device for use with the present invention.

### Detailed Description of the Preferred Embodiments

The present invention will now be described more fully hereinafter with reference to the accompanying drawings, in which preferred embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. Like numbers refer to like elements throughout, and prime notation is used to indicate similar elements in alternate embodiments.

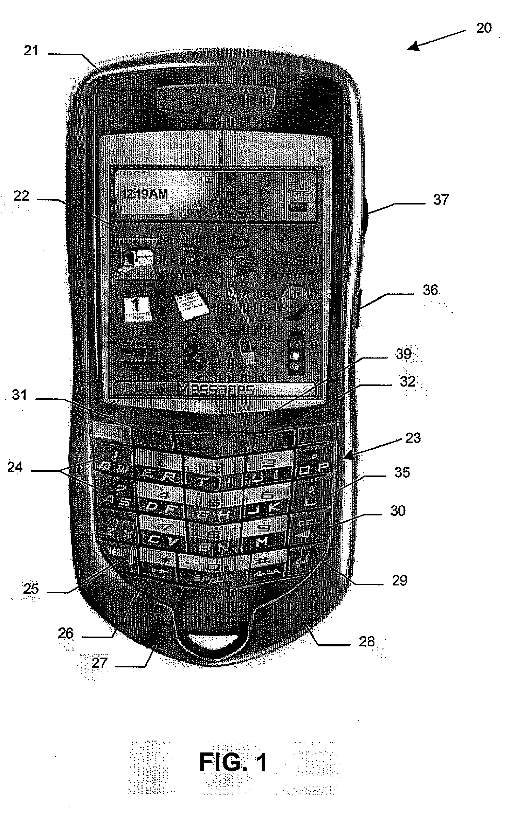

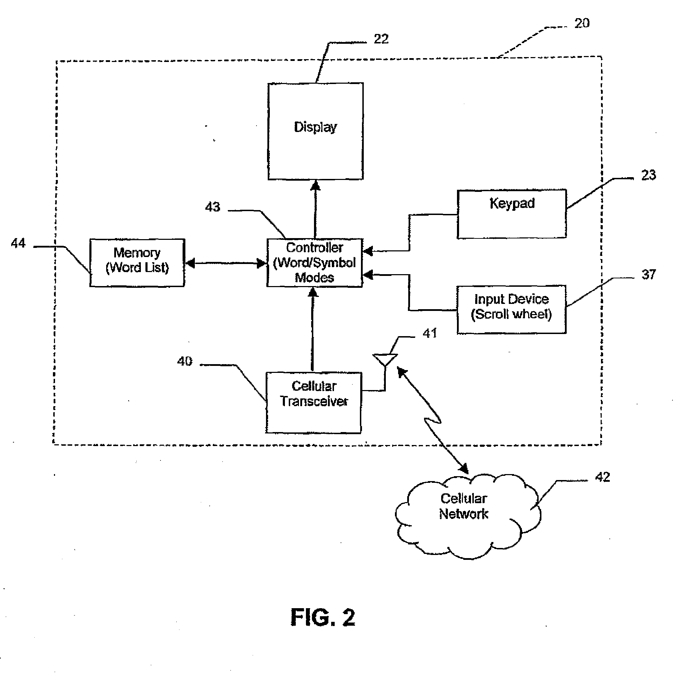

Referring initially to FIGS. 1 and 2, a mobile wireless communications device **20** in accordance with the invention is first described. In the illustrated embodiment, the device **20** is a mobile cellular communications device which includes a cellular transceiver **40** and associated antenna **41** for communicating over a cellular network **42.** In particular, the cellular transceiver **40** may be used for cellular telephone calls as with traditional cellular telephones, and it also preferably cooperates with a controller **43** for sending other data, such as email/Internet data, over the cellular network **42** as well, as will be appreciated by those skilled in the art.

The device **20** illustratively includes a portable, handheld housing **21,** and a display **22** and keypad **23** carried by the housing. A back button **36** and a scroll wheel **37** are also carried by the housing **21** and are connected to the controller **43** for allowing a user to navigate menus, text, etc., as will be appreciated by those skilled in the art. The scroll wheel **37** may also be referred to as a "thumb wheel" or a "track wheel" in some instances. The keypad **23** illustratively includes a plurality of multi-symbol keys **24** each having indicia of a plurality of respective symbols thereon, although multi-symbol keys need not be used in all embodiments. The keypad **23** also illustratively includes an alternate function key **25,** a next key **26,** a space key **27,** a shift key **28,** a return (or enter) key **29,** and a backspace/delete key **30.**

The next key **26** is also used to enter a "*" symbol upon first pressing or actuating the alternate function key **25.** Similarly, the space key **27,** shift key **28** and backspace key **30** are used to enter a "0" and "#", respectively, upon first actuating the alternate function key **25.** The keypad **23** further illustratively includes a send key **31,** an end key **32,** and a convenience (i.e., menu) key **39** for use in placing cellular telephone calls, as will be appreciated by those skilled in the art.

Moreover, the symbols on each key **24** are arranged in top and bottom rows. The symbols in the bottom rows are entered when a user presses a key **24** without first pressing the alternate function key **25,** while the top row symbols are entered by first pressing the alternate function key. As seen in FIG. 1, the multi-symbol keys **24** are arranged in the first three rows on the keypad 23 below the off-hook and on-hook keys **31, 32.** Furthermore, the letter symbols on each of the keys **24** are arranged to define a QWERTY layout. That is, the letters on the keypad **23** are presented in a three-row format, with the letters of each row being in the same order and relative position as in a standard QWERTY keyboard.

Each row of keys (including the fourth row of function keys **25-29**) are arranged in five columns. The multi-symbol keys **24** in the second, third, and fourth columns of the first, second, and third rows have numeric indicia thereon (i.e., 1 through 9) accessible by first actuating the alternate function key **25.** Coupled with the next, space, and shift keys **26, 27, 28,** which respectively enter a "*", "0", and "#" upon first actuating the alternate function key **25,** as noted above, this set of keys defines a standard telephone keypad layout, as would be found on a traditional touch-tone telephone, as will be appreciated by those skilled in the art.

The reason that more than one letter appears on most of the keys **24** is so that less than a full set of QWERTY keys, as found on a traditional computer/typewriter keyboard, can be used to access all of the English alphabet letters. This advantageously allows the footprint of the keypad **23** to remain relatively small which, in turn, allows the overall size of the mobile wireless communications device **20** to be decreased as well.

Yet, as also mentioned above, the tradeoff with placing multiple symbols on a single key is that typing (e.g., typing emails) becomes more difficult for users. To make typing easier, the controller **43** preferably allows symbols/text to be entered in two different modes, namely a multi-tap mode and a predictive mode. In the multi-tap mode, a user enters a desired symbol by pressing a given key a number of times corresponding to its position on the key. Thus, for example, for a user to enter a "W," she would press the QW/! key twice. To enter an exclamation point, the user would press the alternate function key **25** before pressing the QW/! key.

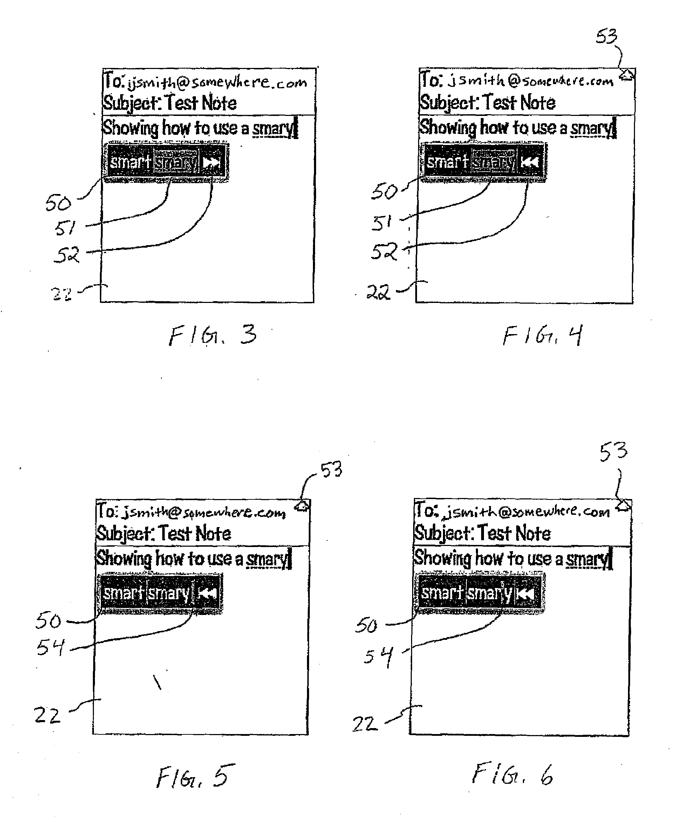

Referring more particularly to FIGS. 3 through 6, in a predictive mode, the controller **43** compares respective symbols corresponding to actuated multi-symbol keys **24** to a list (i.e., dictionary) of words and/or phrases, which is stored in a memory **44.** The controller **43** generates a menu **50** of possible desired words based upon the combination of keys **24** that are pressed, as will be appreciated by those skilled in the art. The possible desired words may be generated according to various rules, such as a general frequency of use of the words, a frequency of use of the words by the user, alphabetically, etc., or a combination thereof. In the illustrated example, for the current word being typed by the user (indicated with dashed underlining), the controller **43** displays the text "smary", which results in possible word choices of "smart" and "smary" in the menu **50.** The controller **43** will cause the first word in the menu 50 (i.e., "smart") to be initially highlighted with a word cursor **51,** and the user may then use the scroll wheel **37** to scroll through other words in the list, as in FIG. 3.

The word cursor **51** can be moved back and forth through the menu **50** using the scroll wheel **37** to highlight a desired word for selection by the user. The user can select a given word by pressing the scroll wheel **37** inward, or by pressing the return key **29** or space key **27,** for example. Once a desired word is selected, the controller **43** inserts the selected word in the active document (e.g., an email, notepad document, etc.), and the process begins again when the user starts entering symbols for a next word.

The controller **43** also preferably generates a scrolling mode or "next" indicator **52** in the menu **50** for indicating whether word scrolling or symbol scrolling is active. In the illustrated example, the scrolling mode indicator **53** is a " 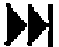 " symbol, i.e., two right-facing arrowheads pointing at a vertical line. Of course, other scrolling mode indicators may be used as well. The symbol scrolling mode is selected by first actuating the alternate function key **25** when the menu **50** is displayed, and then scrolling (or rolling) the scroll wheel **37**.

More particularly, when the alternate function key **25** is actuated by a user, the controller **43** displays an alternate function indicator **53** (e.g., an "A" symbol) in the upper right hand corner of the display **22.** The controller **43** then dynamically changes the appearance of the scrolling mode indicator **52** to a " 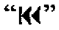 " (i.e., two left-facing arrowheads pointing at a vertical line) upon actuation of the scroll wheel **37.** This informs the user that the ability to move or scroll back through the individual symbols of the last word highlighted by the word cursor **51** is now active. Moreover, when the user rolls the scroll wheel **37,** the controller **43** changes the word cursor **51** to a symbol cursor **54,** as seen in FIGS. 5 and 6, to provide still further visual indication of the change in scrolling modes to the user.

In some embodiments, the controller **43** may also change the color of the symbol cursor **54** (and/or the word cursor **51**) and the scrolling mode indicator **52** to be the same color, to provide still further visual indication of the change in scrolling nodes. Also, if a user wants to switch from the symbol cursor **54** back to the word cursor **51,** this may be done by scrolling the symbol cursor outside of the current word, at which point it would change back to the word cursor. This may be also be done by first pressing the alternate function key **25** and then actuating the scroll wheel **37**."

As a result, a user is more readily able to determine that different modes for navigating the possible desired words in the menu **50** are available. Further, the controller **43** also preferably allows the selected word to be edited when symbol scrolling is active. Thus, users have the ability to quickly select and/or modify possible desired words and therefore enter desired words more rapidly when typing in the predictive mode, for example. Of course, it should be noted that in certain embodiments the controller **43** may allow the symbol cursor **54** to scroll back and forth between symbols of different words, and allow editing of multiple words, for example, if desired.

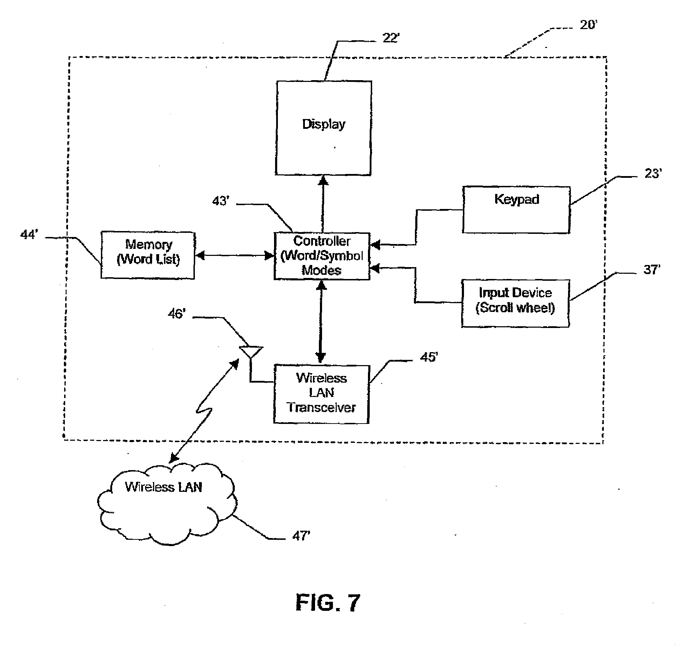

Turning additionally to FIG. 7, the mobile wireless communications device **20'** may optionally include a wireless transceiver **45',** such as a wireless local area network (LAN) (e.g., IEEE802.11/Bluetooth) transceiver, and associated antenna **46'** carried by the portable, handheld housing. The controller **43'** cooperates with the wireless transceiver **45'** to communicate information, such as voice, email, or Internet data, for example, over a wireless personal or local area network **47',** as will be appreciated by those skilled in the art. In other embodiments, both the wireless LAN transceiver **45'** and the cellular transceiver **40** (or another type of wireless transceiver) of FIG. 2 may be included in the same device, as will be appreciated by those skilled in the art.

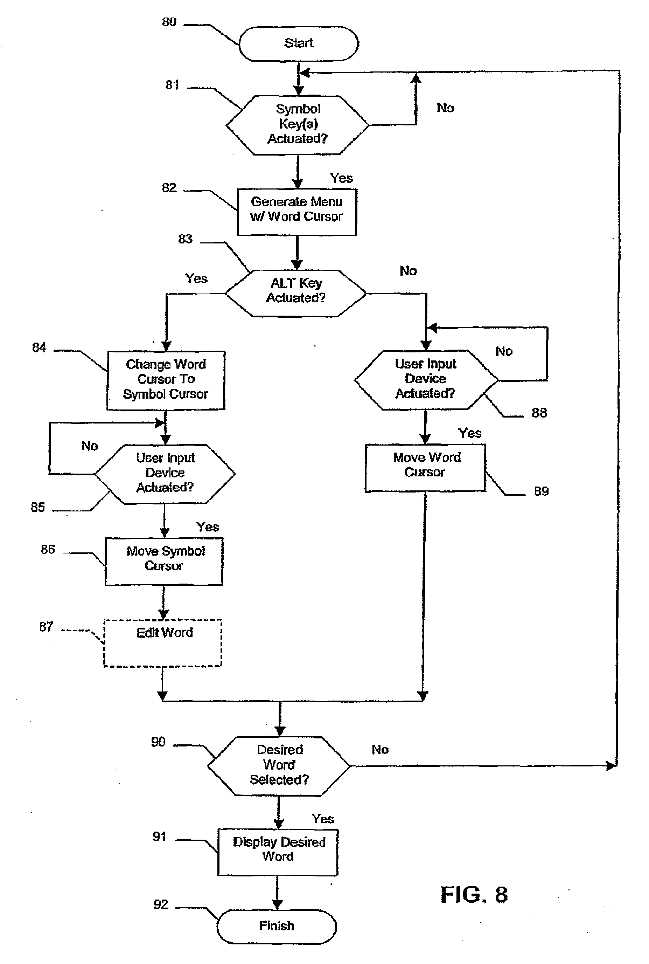

A method aspect of the invention is for using the mobile wireless communications device **20,** and is now described with reference to FIG. 8. Beginning at Block **80,** the controller **43** generates the menu **50** of possible desired words and the word cursor **51** upon actuation of the multi-symbol keys **24,** at Blocks **81** and **82,** as discussed above. If the alternate function key **25** is actuated (and, optionally, the scroll wheel **37** is rolled), at Block **83,** the controller **43** then changes the word cursor **51** to a symbol cursor **54** based thereon. As the user input device (i.e., scroll wheel **37**) is actuated, at Block 85, the controller **43** moves the symbol cursor through the current word, at Block **86.** The controller **43** may optionally allow editing of the current word, at Block **87,** as further discussed above.

If the alternate function key **25** is not actuated during typing, the controller **43** remains in the word scrolling and moves the word cursor **51** through the words in the menu **50** based upon actuation (i.e., rolling) of the scroll wheel **37,** at Blocks **88** and **89.** Once the user fishes editing the desired word, or highlights the desired word with the word cursor **51,** this word may then be selected (Block **90**) by pressing the scroll wheel **37** inward, or by pressing the return key **29** or space key **27.** The controller **43** then displays the desired word in the active document (e.g., email, a notepad document, etc.), at Block **91,** thus concluding the illustrated method (Block **92).** Of course, it will be appreciated that the above-described method would be repeated as the user continues entering further words. Moreover, if a desired word is not selected, the controller **43** will also return to the step illustrated at Block **81** as the user actuates additional keys.

The controller **43** may be implemented with a microprocessor and associated software modules to be executed thereby, as will be appreciated by those skilled in the art. Moreover, the keypad **23** need not include soft keys as illustrated in FIG. 1, but instead may include other types of keys as well, such as touch keys on a display, for example. It should also be noted that various other multi-symbol key configurations may be used other than the exemplary configuration shown, and a QWERTY layout need not be used in all embodiments. Similarly, other arrangements of numbers on the keypad **23** may be used as well.

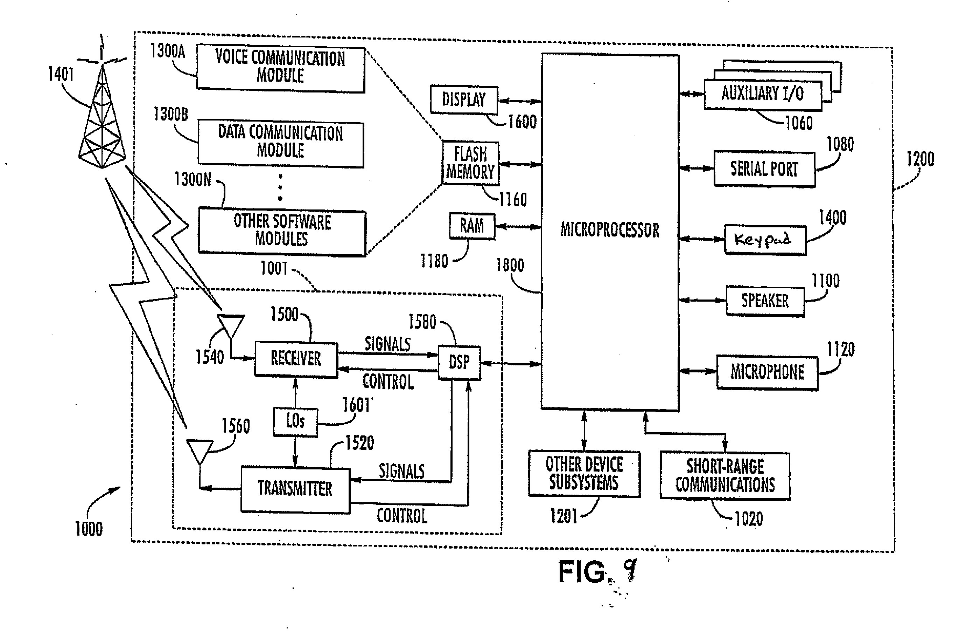

Another example of a handheld mobile wireless communications device 1000 that may be used in accordance the present invention is further described in the example below with reference to FIG. 9. The device **1000** includes a housing **1200,** a keypad **1400** and an output device **1600.** The output device shown is a display **1600,** which is preferably a full graphic LCD. Other types of output devices may alternatively be utilized. A processing device **1800** is contained within the housing **1200** and is coupled between the keypad **1400** and the display **1600.** The processing device **1800** controls the operation of the display **1600,** as well as the overall operation of the mobile device **1000,** in response to actuation of keys on the keypad **1400** by the user.

The housing **1200** may be elongated vertically, or may take on other sizes and shapes (including clamshell housing structures). The keypad may include a mode selection key, or other hardware or software for switching between text entry and telephony entry.

In addition to the processing device **1800,** other parts of the mobile device **1000** are shown schematically in FIG. 9. These include a communications subsystem **1001;** a short-range communications subsystem **1020;** the keypad **1400** and the display **1600,** along with other input/output devices **1060,1080,1100** and **1120;** as well as memory devices **1160,1180** and various other device subsystems **1201.** The mobile device **1000** is preferably a two-way RF communications device having voice and data communications capabilities. In addition, the mobile device **1000** preferably has the capability to communicate with other computer systems via the Internet.

Operating system software executed by the processing device **1800** is preferably stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM **1180.**

The processing device **1800,** in addition to its operating system functions, enables execution of software applications **1300A-1300N** on the device **1000.** A predetermined set of applications that control basic device operations, such as data and voice communications **1300A** and **1300B,** may be installed on the device **1000** during manufacture. In addition, a personal information manager (PIM) application may be installed during manufacture. The PIM is preferably capable of organizing and managing data items, such as e-mail, calendar events, voice mails, appointments, and task items. The PIM application is also preferably capable of sending and receiving data items via a wireless network **1401.** Preferably, the PIM data items are seamlessly integrated, synchronized and updated via the wireless network 1401 with the device user's corresponding data items stored or associated with a host computer system.

Communication functions, including data and voice communications, are performed through the communications subsystem **1001,** and possibly through the short-range communications subsystem. The communications subsystem **1001** includes a receiver **1500,** a transmitter **1520,** and one or more antennas **1540** and **1560.** In addition, the communications subsystem **1001** also includes a processing module, such as a digital signal processor (DSP) **1580,** and local oscillators (LOs) **1601.** The specific design and implementation of the communications subsystem **1001** is dependent upon the communications network in which the mobile device **1000** is intended to operate. For example, a mobile device **1000** may include a communications subsystem **1001** designed to operate with the Mobitex™, Data TAC™ or General Packet Radio Service (GPRS) mobile data communications networks, and also designed to operate with any of a variety of voice communications networks, such as AMPS, TDMA, CDMA, PCS, GSM, etc. Other types of data and voice networks, both separate and integrated, may also be utilized with the mobile device **1000.**

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore requires a subscriber identity module, commonly referred to as a SIM card, in order to operate on a GPRS network.

When required network registration or activation procedures have been completed, the mobile device **1000** may send and receive communications signals over the communication network **1401.** Signals received from the communications network **1401** by the antenna **1540** are routed to the receiver **1500,** which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520.** For example, gains applied to communications signals in the receiver **1500** and transmitter **1520** may be adaptively controlled through automatic gain control algorithms implemented in the DSP **1580.**

In a data communications mode, a received signal, such as a text message or web page download, is processed by the communications subsystem **1001** and is input to the processing device **1800.** The received signal is then further processed by the processing device **1800** for an output to the display **1600,** or alternatively to some other auxiliary I/O device **1060.** A device user may also compose data items, such as e-mail messages, using the keypad **1400** and/or some other auxiliary I/O device **1060,** such as a touchpad, a rocker switch, a thumb-wheel, or some other type of input device. The composed data items may then be transmitted over the communications network **1401** via the communications subsystem **1001.**

In a voice communications mode, overall operation of the device is substantially similar to the data communications mode, except that received signals are output to a speaker **1100,** and signals for transmission are generated by a microphone **1120.** Alternative voice or audio I/O subsystems, such as a voice message recording subsystem, may also be implemented on the device 1000. In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, or a Bluetooth communications module to provide for communication with similarly-enabled systems and devices.

Many modifications and other embodiments of the invention will come to the mind of one skilled in the art having the benefit of the teachings presented in the foregoing descriptions and the associated drawings. Therefore, it is understood that the invention is not to be limited to the specific embodiments disclosed, and that modifications and embodiments, are intended to be included within the scope of the appended claims.

The following combinations are also disclosed herein.

A mobile wireless communications device comprising: a portable, handheld housing; a display carried by said portable, handheld housing; a keypad carried by said portable, handheld housing and comprising a plurality of symbol keys each having indicia of at least one respective symbol thereon, and an alternate function key; a user input device carried by said portable, handheld housing; and a controller carried by said portable, handheld housing and connected to said display and said keypad and operable to: generate a menu of possible desired words based upon actuation of said symbol keys, generate a word cursor in the menu for scrolling through the possible desired words based upon said user input device; and change the word cursor to a symbol cursor based upon actuation of said alternate function key for scrolling through symbols in at least one of the possible desired words based upon said user input device.

The controller may be operable to generate a scrolling mode indicator in the menu for indicating whether word scrolling or symbol scrolling is active.

The controller may be operable to cause the scrolling mode indicator to change appearance based upon actuation of said alternate function key to indicate that symbol scrolling is active.

The scrolling mode indicator may comprise at least one arrow, and the controller may be operable to cause the at least one arrow to change direction upon actuation of said alternate function key.

The symbol cursor may be operable to allow scrolling through symbols in a last word selected by the word cursor.

The controller may be operable to allow at least one possible desired word to be edited when symbol scrolling is active.

The user input device may comprise a scroll wheel.

The controller may be operable to change the word cursor to the symbol cursor based upon actuation of said alternate function key and said user input device.

The mobile wireless communications device may further comprising a wireless transceiver carried by said portable, handheld housing; and wherein said controller cooperates with said wireless transceiver for communicating over a wireless communications network.

The wireless transceiver may comprise a cellular transceiver.

The wireless transceiver may comprise a wireless local area network (WLAN) transceiver.

A set of the symbol keys may have indicia of a plurality of respective symbols thereon to define multi-symbol keys.

The symbols may comprise letters; and the symbol keys may be arranged to define a QWERTY layout.

A method for using a mobile wireless communications device comprising a portable, handheld housing, a display carried by the portable, handheld housing, a keypad carried by the portable, handheld housing and comprising a plurality of symbol keys each having indicia of at least one respective symbol thereon, and an alternate function key, and a user input device carried by the portable, handheld housing, the method comprising: generating a menu of possible desired words based upon actuation of the symbol keys; generating a word cursor in the menu for scrolling through the possible desired words based upon the user input device; and changing the word cursor to a symbol cursor based upon actuation of the alternate function key for scrolling through symbols in at least one of the possible desired words based upon the user input device.

The method may further comprise generating a scrolling mode indicator in the menu for indicating whether word scrolling or symbol scrolling is active.

The method may further comprise causing the scrolling mode indicator to change appearance based upon actuation of the alternate function key to indicate that symbol scrolling is active.

The scrolling mode indicator may comprise at least one arrow, and causing the scrolling mode indicator to change appearance may comprise causing the at least one arrow to change direction upon actuation of the alternate function key.

The symbol cursor may be for scrolling through symbols in a last word selected by the word cursor.

The method may further comprise allowing at least one possible desired word to be edited when symbol scrolling is active.

The mobile wireless communications device may further comprise a wireless transceiver carried by the portable, handheld housing; and further comprising using the wireless transceiver for communicating over a wireless network.

Changing the word cursor to a symbol cursor may comprise changing the word cursor to a symbol cursor based upon actuation of the alternate function key and the user input device.

## Claims

1. A method for using a mobile wireless communications device (20) comprising a portable, handheld housing (21), a display (22) carried by the portable, handheld housing, a keypad (23) carried by the portable, handheld housing and comprising a plurality of symbol keys (24) each having indicia of at least one respective symbol thereon, and an alternate function key (25), and a user input device carried by the portable, handheld housing, the method comprising:
generating a menu (50) of a plurality of possible desired words based upon actuation of the symbol keys and displaying the menu on the display;
determining an actuation of the alternate function key for
if the alternate function key is not actuated generating and displaying a word cursor (51) and displaying the word cursor on the display and in the menu, the word cursor for scrolling through the possible desired words in response to actuation of the user input device, and
if the alternate function key is actuated changing the word cursor to a symbol cursor (54) for scrolling through and editing symbols in at least one of the possible desired words in response to actuation of the user input device while retaining the plurality of possible desired words in the menu; and
selecting a desired word from the at least one of the possible desired words, and displaying the desired word in an active document on the display.

2. The method of Claim 1 further comprising changing the symbol cursor to a word cursor based upon a scrolling of the symbol cursor outside the at least one of the possible desired words.

3. The method of Claim 1 wherein the user input device comprises a user input scrolling wheel; wherein scrolling through the possible desired words is in response to a rotation of the user input scrolling wheel; and wherein editing symbols in at least one of the possible desired words is based upon a rotation of the user input scrolling wheel.

4. The method of Claim 1 further comprising generating a scrolling mode indicator (52) in the menu (50) for indicating whether word scrolling or symbol scrolling is active.

5. The method of Claim 4 further comprising causing the scrolling mode indicator (52) to change appearance based upon actuation of the alternate function key (25) to indicate that symbol scrolling is active.

6. The method of Claim 5 wherein the scrolling mode indicator (52) comprises at least one arrow, and wherein causing the scrolling mode indicator to change appearance comprises causing the at least one arrow to change direction upon actuation of the alternate function key (25).

7. The method of any of Claims 1 to 6 wherein the symbol cursor (54) is for scrolling through symbols in a last word selected by the word cursor (51).

8. The method of any of Claims 1 to 7 further comprising allowing at least one possible desired word to be edited when symbol scrolling is active.

9. The method of any of Claims 1 to 8 wherein the mobile wireless communications device (20) further comprises a wireless transceiver (40, 45') carried by the portable, handheld housing (21); and further comprising using the wireless transceiver for communicating over a wireless network (1401).

10. The method of Claim 1 wherein changing the word cursor (51) to a symbol cursor (54) comprises changing the word cursor to a symbol cursor based upon actuation of the alternate function key (25) and the user input device.

11. The method of Claim 1 wherein generating the menu comprises generating the menu of the possible desired words according to at least one of frequency of use of the possible desired words, frequency of use of the possible desired words by the user, and alphabetically.

12. A mobile wireless communications device (20) comprising:
a portable, handheld housing (21);
a display (22) carried by said portable, handheld housing;
a keypad (23) carried by said portable, handheld housing and comprising a plurality of symbol keys (24) each having indicia of at least one respective symbol thereon, and an alternate function key (25);
a user input scrolling device carried by said portable, handheld housing; and
a controller (43) carried by said portable, handheld housing and connected to said display and said keypad:
**characterized in that** said controller is operable to
generate a menu (50) of a plurality of possible desired words based upon actuation of said symbol keys and display the menu on said display,
determine an actuation of said alternate function key, said controller also operable to
if said alternate function key is not actuated, generate and display a word cursor (51) and display the word cursor on said display and in the menu, said word cursor being operable, in response to actuation of said user input scrolling device, to scroll through the possible desired words, and
if said alternate function key is actuated, change the word cursor to a symbol cursor (54) being operable, in response to actuation of said user input scrolling device, to scroll through symbols in at least one of the possible desired words while retaining the plurality of possible desired words in the menu, and
select a desired word from at least one of the possible desired words, and display the desired word in an active document on the display.

13. The mobile wireless communications device of Claim 12 wherein said controller (43) is operable to change the symbol cursor to a word cursor based upon a scrolling of the symbol cursor outside the at least one of the possible desired words.

14. The mobile wireless communications device of Claim 12 wherein said user input scrolling device comprises a user input scrolling wheel; wherein the controller is operative to scroll through the possible desired words in response to a rotation of the user input scrolling wheel; and wherein the controller is operative to edit symbols in at least one of the possible desired words based upon a rotation of the user input scrolling wheel.

15. The mobile wireless communications device (20) of Claim 12 wherein said controller (43) is operable to generate a scrolling mode indicator (52) in the menu (50) for indicating whether word scrolling or symbol scrolling is active.
